# EUROPEAN PATENT SPECIFICATION

(11) **EP 4 516 673 B1**
(45) Date of publication and mention of the grant of the patent: **30.09.2026**
(21) Application number: 23194594.0
(22) Date of filing: 31.08.2023
(51) Int. Cl.: B64D 11/02, E03F 1/00

(54) **A LAVATORY REUSING GREYWATER FOR FLUSHING A TOILET**
TOILETTE MIT WIEDERVERWENDUNG VON GRAUWASSER ZUM TOILETTENSPÜLEN
TOILETTES RÉUTILISANT DES EAUX GRISES POUR RINCER DES TOILETTES

(43) Date of publication of application: 05.03.2025
(73) Proprietor: Airbus Operations GmbH, 21129 Hamburg (DE)
(72) Inventor: Schreiner, Axel, 21129 Hamburg (DE); Schneider, Frank, 21129 Hamburg (DE); Bornholdt, Riko, 21129 Hamburg (DE); Rempe, Michael, 21129 Hamburg (DE)
(74) Representative: Airbus Germany

(56) References cited:
- EP-B1- 0 530 859
- US-A- 4 521 925
- US-A- 5 692 250

## Description

The present disclosure generally relates to a greywater reuse lavatory for a vehicle and a corresponding vehicle equipped therewith. In particular, the present disclosure relates to a greywater reuse lavatory buffering greywater from a water consumer and flushing a toilet bowl with the greywater via a flushing supply pipe having a plurality of nozzles, wherein the flushing supply pipe can be flushed via a discharge.

In the present disclosure, greywater means waste water without contamination that would harm human beings. Sources of greywater include a sink, water fountain, shower, dishwasher, or the like, but excludes wastewater from toilets (sometimes referred to as blackwater).

A conventional lavatory, such as a lavatory installed in an aircraft or other passenger vehicle, provides fresh water to a water consumer, such as a faucet and sink, as well as to a toilet bowl for flushing the toilet. This facilitates piping, as the water consumer and the toilet bowl can be connected to the same freshwater delivery system. However, employing fresh water to flush the toilet requires additional equipment, such as a backflow prevention for hygienic reasons, e.g., a vacuum breaker.

In order to reduce fresh water consumption, some vehicles are equipped with a greywater collecting tank, into which all water consumers producing only greywater can drain. This greywater is then used to supply a plurality of toilet flushing systems in the vehicle.

However, in both cases, additional weight is carried by the vehicle. Specifically, either a greater amount of freshwater has to be carried, or a second water delivery system is to be installed in the vehicle for the greywater distribution. Moreover, the provision of two water delivery/distribution systems comes with an increased complexity and require an operational maintenance effort.

In addition, greywater can include some particles, fibres, organic matter, or the like. Thus, a physical/chemical treatment, including a filter has to be installed with such greywater distribution systems. For instance, toilet flushing systems usually include nozzles having a small outlet cross-section, which may clog from the particles, fibres, organic matter, etc. in the greywater. This, however, requires additional efforts, such as filter cleaning, filter replacing, greywater treatment (e.g. chemical treatment) and the like. Cleaning the filter by backwashing requires freshwater.

For instance, EP 0 530 859 B1 relates to a vacuum toilet system for an aircraft having a toilet bowl with a discharge valve controlling flow of material from the toilet bowl to a holding tank. The system further comprises a water utilisation unit (hand basin), a water source, an outlet pipe of the hand basin connected to a greywater reservoir, and a filter at a discharge opening of the reservoir. To flush the toilet, the system further comprises a pressure actuated pump discharging greywater from the pump through a rinse water supply pipe and a spray nozzle system into the toilet bowl.

It is therefore an object of the present disclosure to provide an improved greywater reuse lavatory that is less complex and lightweight.

This object is solved by the present invention as defined in the independent claims. Preferred embodiments are defined by the dependent claims.

According to a first aspect to better understand the present disclosure, a greywater reuse lavatory for an aircraft comprises a water consumer associated with a (fresh) water source, and a greywater buffer fluidly coupled to a drain of the water consumer and configured to buffer a predefined amount of greywater drained from the water consumer. The greywater reuse lavatory further comprises a toilet bowl, a flushing supply pipe fluidly coupled to the greywater buffer and arranged in or at the toilet bowl, and a plurality of nozzles arranged in the flushing supply pipe and configured to flush the toilet bowl with greywater.

The water consumer can be a sink, water fountain, shower, dishwasher, or the like. The associated water source can be connected to a freshwater supply system, so that the water consumer consumes (supplies) freshwater.

Moreover, the flushing supply pipe comprises a discharge (also referred to as a first discharge) that is arranged in the toilet bowl and is configured to selectively open and close. The discharge has a cross-sectional area that is larger than a cross-sectional area of each of the plurality of nozzles. When the discharge is closed (also referred to as being brought into a closed state or closed position), no significant amount of water drains therethrough. This may include a watertight closing of the discharge. Since the discharge is arranged in the toilet bowl, a small leakage into the toilet bowl, for example, during flushing the toilet bowl, is also possible. Moreover, when the discharge is opened (also referred to as being brought into an open state or open position), the discharge provides a fluid connection between the interior of the flushing supply pipe and the ambient (e.g., the inside volume of the toilet bowl or a draining system), so that any greywater and accumulated matter inside of the flushing supply pipe can be released through the cross-sectional area of the discharge.

Thus, the flushing supply pipe can be operated with greywater, but without requiring additional (pre-) filtration or other physical/chemical treatment components. Specifically, the plurality of nozzles may act as a filter for any particles, fibres, organic matter, or the like. The accumulated (filtered) material can be flushed out of the flushing supply pipe through the discharge, as the discharge has a larger cross-sectional area.

For instance, the cross-sectional area of the discharge may be equal to or larger than the sum of all cross-sectional areas of the nozzles. Thus, the open discharge forms the flushing path of least resistance and the greywater in the flushing supply pipe can be released through the discharge. The greywater may be released through the discharge and, hence, through the flushing supply pipe at a higher flow velocity as during a regular flush of the toilet bowl. Such higher flow velocity supports cleaning of the inner part of the flushing supply pipe, in order to remove any accumulated matter.

As a mere example, on a regular basis, such as after a certain number of toilet flushes or after a certain time period, the discharge is brought into an open state, so that greywater can flow through the cross-sectional area of the discharge. Thereby, any accumulated (filtered) material inside of the flushing supply pipe, such as at the nozzle or any other location in the flushing supply pipe, will be flushed out and the flushing supply pipe can be cleaned.

In an implementation variant, the discharge can be brought into an open state and the greywater buffered in the greywater buffer flushes through the flushing supply pipe only by gravity. Thus, at least a portion of the greywater buffer is installed above the flushing supply pipe (or at least a portion thereof including the discharge). Alternatively or additionally, the greywater buffered in the greywater buffer can flush through the flushing supply pipe by an environmental pressure difference at the buffer and the discharge(including a higher pressure at in the buffer and a lower pressure (vacuum) at the discharge.

In another implementation variant, the greywater reuse lavatory can further comprise a greywater conveying device configured to convey greywater from the greywater buffer to the flushing supply pipe. This provides for operating the greywater conveying device when the toilet bowl is to be flushed, instead of a constantly pressurised centralised greywater distribution system.

Furthermore, the greywater conveying device can be operated to flush out the flushing supply pipe, i.e., to clean the flushing supply pipe with the discharge being in an open position. This operation of the greywater conveying device can be performed on a regular basis, such as after a certain time period since the last flushing out of the flushing supply pipe, or after a certain number of toilet bowl flushes, or pending on a limit pressure value downstream to its outlet.

For example, the greywater conveying device can be further configured to pressurise the greywater in the flushing supply pipe. The pressure of the greywater in the flushing supply pipe can be preset to a particular pressure level. Such preset pressure level may correspond to a pressure required to flush the toilet bowl with greywater sprayed through the nozzles. Alternatively, the greywater conveying device can be controlled to convey greywater and achieve different pressure levels in the flushing supply pipe.

Furthermore, the greywater conveying device can be operated under a predefined time regime. For instance, the greywater conveying device may be operated/activated when a user presses a corresponding button to flush the toilet bowl. The pressing of such a button, however, may be used as an indication, but the actual operation of the conveying device and/or actual flushing of the toilet bowl is performed with the preset delay or based on other factors, for example, when a vacuum waste water system is ready to flush the toilet bowl.

In a further implementation variant, the greywater buffer may be formed by a piping between the drain of the water consumer and the flushing supply pipe. As a mere example, at least a portion of such piping may have an increased diameter, so that greywater can be buffered therein. For instance, a portion of such piping having the highest location relative to the flushing supply pipe, such as directly downstream of the drain of the water consumer, may have an increased diameter or other form, in order to buffer the greywater.

Alternatively or additionally, the greywater buffer may comprise a greywater buffer tank. Such greywater buffer tank can be installed anywhere between the drain of the water consumer and the flushing supply pipe. This includes a branch of a piping downstream of the drain of the water consumer, in order to buffer/collect greywater.

In case a greywater conveying device is installed, the greywater buffer (portion of the piping) or the greywater buffer tank is to be installed upstream of the greywater conveying device. Alternatively or additionally, the greywater conveying device can be provided in the greywater buffer (tank), such as at an end of portion of a piping configured to buffer the greywater or at an outlet of the greywater buffer tank.

In a further implementation variant, the drain of the water consumer may be configured to be closed, and a device may be provided that pressurises the greywater in the greywater buffer (tank), e.g., with pressurised air. Alternatively, the greywater conveying device can be configured to pressurises the greywater in the greywater (tank). Thus, when pressure is developed, the toilet bowl can be flushed and/or the flushing supply pipe can be flushed out or cleaned by opening the discharge.

In another implementation variant, the flushing supply pipe can be arranged continuously from an inlet of the flushing supply pipe to the discharge along an inner circumference of the toilet bowl. Thus, the flushing supply pipe can be arranged in an area of the toilet bowl, where flushing is most effective. More specifically, the plurality of nozzles being arranged in the flushing supply pipe will be arranged in the area of the toilet bowl, where flushing is most effective and required.

As a mere example, the flushing supply pipe can be a continuous ring arranged in an upper area of the toilet bowl. The flushing supply pipe can be arranged in such a way that the nozzles spray greywater onto the inner surface of the toilet bowl, in order to support cleaning the inner surface and flush the toilet bowl The discharge can be arranged anywhere along this flushing supply pipe ring.

Alternatively, the flushing supply pipe has an end downstream of the inlet of the flushing supply pipe, and the discharge is arranged at this end of the flushing supply pipe. This allows ensuring that the entire flushing supply pipe will be flushed out and avoids any dead ends or portions of the flushing supply pipe that will not be flushed out or cleaned, when the discharge is brought into an open position.

In a further implementation variant, the flushing supply pipe can have at least one branch and a further discharge (also referred to as the second discharge), wherein the at least one branch is arranged continuously from the inlet of the flushing supply pipe to the further discharge along an inner circumference of the toilet bowl. In other words, the flushing supply pipe can have a Y-shape or horseshoe shape, wherein a discharge is arranged at each end, and the inlet is provided anywhere between these two ends. This allows flushing out or cleaning the flushing supply pipe more easily, as the sections to be flushed out or cleaned are shorter compared to a flushing supply pipe with only one end.

In yet a further implementation variant, the greywater reuse lavatory can further comprise a further discharge (also referred to as a third discharge) arranged between an inlet and any point of the flushing supply pipe downstream of the inlet. This allows providing the discharge and the further discharge at different positions along the flushing supply pipe, so that shorter sections of the flushing supply pipe can be flushed out or cleaned.

As a mere example, only one discharge may be brought into an open position at a time. Thus, specific sections of the flushing supply pipe can be flushed out or cleaned. For instance, the discharge closest to the inlet can be opened first and thereafter any discharge downstream therefrom is (subsequently) opened.

It is to be understood that the greywater reuse lavatory can further comprise a plurality of discharges, particularly two or more discharges. This also applies to each branch of the flushing supply pipe that may likewise comprise a plurality of discharges.

In another implementation variant, the discharge can comprise a mechanical valve configured to open, if a pressure of the greywater in the flushing supply pipe exceeds a predefined threshold. The predefined threshold (a predefined greywater pressure in the flushing supply pipe) can be set to be higher than a pressure used to flush the toilet bowl. Thus, during a regular toilet bowl flush greywater is only sprayed through the plurality of nozzles, and the discharge (or the discharges) are closed. If the pressure of the greywater in the flushing supply pipe is increased and exceeds the predefined threshold, the discharge, i.e., the mechanical valve or flap, opens. This allows integrating an overpressure valve functionality into the discharge, so that the flushing supply pipe is protected from damage due to overpressure.

As a mere example, the discharge can include a biasing element, such as a spring, biasing the discharge into the closed position. The discharge can further be arranged and configured, so that the pressurised greywater acts against the biasing element (e.g., via the valve element or flap). By choosing or setting the biasing element in such a manner that it only withstands the predefined (threshold) pressure, any higher pressure will open the discharge and the greywater can be discharged through the discharge, thereby flushing out and cleaning the flushing supply pipe.

In a further implementation variant, the discharge can comprise an electrically and/or pneumatically controlled valve or flap. Thus, the flushing supply pipe can be flushed out or cleaned irrespective of the pressure under which the greywater is provided into the flushing supply pipe.

In yet a further implementation variant, a drain of the toilet bowl can be fluidly connected to a vacuum waste water system, and the pneumatically controlled valve or flap is driven by the vacuum present in the vacuum waste water system. Thus, no additional sources for operating the discharge is required, as the vacuum of the vacuum waste water system can be used to bring the pneumatically controlled discharge into the open position and/or the closed position. As the drain of the toilet bowl and the discharge are located very close to one another, any piping required to pneumatically or control the valve or flap can be very short.

It is to be understood that the discharge may likewise be brought into the closed position by a mechanical biasing element, while the vacuum of the vacuum waste water system is used to open the discharge.

In another implementation variant, the discharge can be fluidly connected to a vacuum waste water system. Specifically, the discharge can be connected to the vacuum waste water system on a discharge side of the discharge. In other words, when the discharge is in an open position, a fluid connection is achieved between the interior of the flushing supply pipe and the vacuum waste water system. Thus, the discharge does not open into the toilet bowl, but into the vacuum waste water system. Any greywater used to flush out or clean the flushing supply pipe is directly fed into the vacuum waste water system (instead of via the toilet bowl and associated drain). This further facilitates flushing out or cleaning the flushing supply pipe, as the pressure difference between the greywater buffer (or greywater conveying device) and the vacuum waste water system is greater than a pressure difference between the greywater and the ambient.

In yet another implementation variant, at least some of the plurality of nozzles can be made of a rigid material. As a mere example, at least some of the plurality of nozzles can be made from a rigid plastic or metal. This allows providing a constant flushing behaviour of the toilet bowl, particularly if the greywater is pressurised with the same pressure.

In a further implementation variant, at least some of the plurality of nozzles can be made of an elastic material configured to expand based on a pressure of the greywater in the flushing supply pipe. Specifically, with increasing pressure of the greywater, the nozzles expand and their cross-sectional area increases. Thus, by increasing the pressure of the greywater, particularly above a predefined threshold (pressure level) being higher than a regular greywater pressure for flushing the toilet bowl, material accumulated at the nozzle can be flushed out and the nozzle can be cleaned. This allows an additional cleaning effect before or when the discharge is opened.

In an implementation variant, the greywater reuse lavatory can further comprise a control unit configured to control the greywater reuse lavatory, so that the discharge achieves an open state and the flushing supply pipe is flushed with greywater through the discharge.

As a mere example, the control unit can be coupled with the greywater conveying device, in order to convey greywater towards the flushing supply pipe. This further allows providing the greywater with a pressure opening the discharge, particularly a mechanically operated discharge, and further providing a sufficient flow rate of the greywater through the flushing supply pipe and discharge.

Furthermore, if the discharge includes an electrically and/or pneumatically operating means (or actuator), the control unit can be configured to control this means, in order to open and close the discharge, whenever necessary.

It is to be understood that the control unit can also control a regular flush of the toilet only via the nozzles, for example, by operating the conveying device accordingly and/or closing the discharge(s).

In another implementation variant, the control unit can further be configured to fill the greywater buffer (tank) before a regular flush of the toilet bowl, in case the greywater buffer (tank) does not buffer enough water for one flush. As a mere example, the control unit can be configured to control a valve filling the greywater buffer (tank) with freshwater. Instead of a separate freshwater valve, the control unit can also be configured to control the water source of the water consumer, such as a faucet of a sink or a water fountain, in order to fill the greywater buffer (tank).

In yet another implementation variant, the control unit can further be configured to flush out or clean the flushing supply pipe at regular intervals, such as after a specific number of flushes or after a specific time period. In this case, the control unit can count the number of flushes or measure the time since the last time the flushing supply pipe was flushed out or cleaned.

Furthermore, in case a plurality of water consumers are installed adjacent or close to one another, the greywater buffer (tank) can buffer greywater from more than one water consumer. This plurality of water consumers can be of the same monument as well as of different monuments, wherein a monument can be a lavatory, a galley, a shower, a water fountain or the like.

According to a second aspect to better understand the present disclosure, an aircraft comprises at least one greywater reuse lavatory of the first aspect or one or more of its variants.

Since each greywater reuse lavatory comprises its own greywater buffer (tank), such buffer (tank) can be sized much smaller compared to a corresponding tank in a general greywater collection system. As a mere example, the greywater buffer (tank) can be sized to buffer greywater for a small number of toilet flushes, such as a one flush, two flushes or three flushes. This buffer size is usually sufficient, as a sink is used by passengers at least as often as the toilet bowl is flushed, so that sufficient grey water can be buffered.

The entire weight required for water supply in the aircraft can be reduced, since greywater reuse for flushing the toilet can save up to 1/3 of freshwater. In case of carrying 1000 L of freshwater, around 330 L and, hence, 330 kg can be saved. This further allows designing the freshwater tank smaller, which enlarges the revenue space of the aircraft.

Furthermore, no specifics greywater treatment is required, so that the weight of the aircraft is not increased due to the greywater reuse compared to an aircraft having no greywater reuse system.

Finally, if the greywater reuse lavatory is equipped with a greywater conveying device, the freshwater supply system of the aircraft can be operated with a decreased pressure, since the highest pressure is usually required for flushing the toilet. Thus, smaller freshwater pipes and pumps can be installed in the aircraft.

The present disclosure is not restricted to the aspects and variants in the described form and order.

In the following, the present disclosure will further be described with reference to exemplary implementations illustrated in the figures, in which:
- Figure 1: schematically illustrates a greywater reuse lavatory;
- Figure 2: schematically illustrates details of an exemplary greywater flushing supply pipe;
- Figure 3: schematically illustrates details of another exemplary greywater flushing supply pipe; and
- Figure 4: schematically illustrates an aircraft.

In the following description, for purposes of explanation and not limitation, specific details are set forth in order to provide a thorough understanding of the present disclosure. It will be apparent to one skilled in the art that the present disclosure may be practiced in other implementations that depart from these specific details.

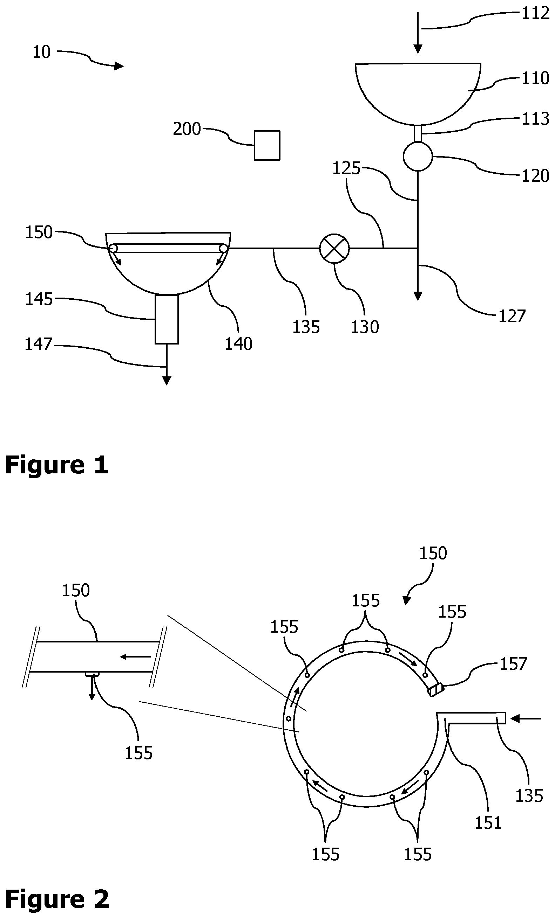

Figure 1 schematically illustrates a greywater reuse lavatory 10 comprising a water consumer 110 associated with a water source 112, which are depicted exemplarily as a sink and a schematic faucet. The water consumer 110 has a drain 113, through which used water, referred to as a greywater, is drained. In case of the sink, this greywater is water containing soap or the like used by a passenger washing their hands or the like.

The greywater reuse lavatory 10 further comprises a greywater buffer, which is illustrated as a greywater buffer tank 120 fluidly coupled to the drain 113 of the water consumer 110 and configured to buffer a predefined amount of greywater drained from the water consumer 110. It is to be understood that the greywater pipe 125 fluidly connected to the drain 113 and/or the greywater pipe 135 can also be configured to act as a greywater buffer. As a mere example, the greywater pipe 125, 135 may be sized (an inner diameter) over a predefined portion (length) to buffer greywater drained from the water consumer 110. A specific greywater buffer tank 120 of predefined volume may be installed irrespective of the buffer capability of the greywater pipe 125, 135. Actually, any greywater pipe will have an inherent buffer volume. Thus, in the present disclosure the terms "greywater buffer" (125, 135) and "greywater buffer tank" (120) can be used interchangeably and the present disclosure is not restricted to the presence of a dedicated tank 120. As will be explained in more detail below, the greywater is used for a toilet flush, so that the predefined amount of greywater stored by the greywater pipe 125, 135 and/or the buffer tank 120 can correspond to one flush, two flushes or three flushes, while the present disclosure is not restricted to the number of flushes.

The greywater buffer tank 120 is fluidly connected to greywater pipes 125, 135 arranged downstream of the buffer tank 120, in order to release greywater from the buffer tank 120 for further use. In addition, the greywater pipe 125 or the greywater buffer tank 120 may be fluidly connected to a waste water system, for example, via a connection 127. This allows releasing greywater from the buffer 120, 125 into the waste water system, for example, in case the buffer 120, 125 is filled (with the predefined amount of greywater and/or completely). The waste water system can be a vacuum waste water system. Alternatively or additionally, the connection 127 can be employed to connect the greywater pipe 125 to an overboard drain, where the greywater is directly released from the vehicle (aircraft).

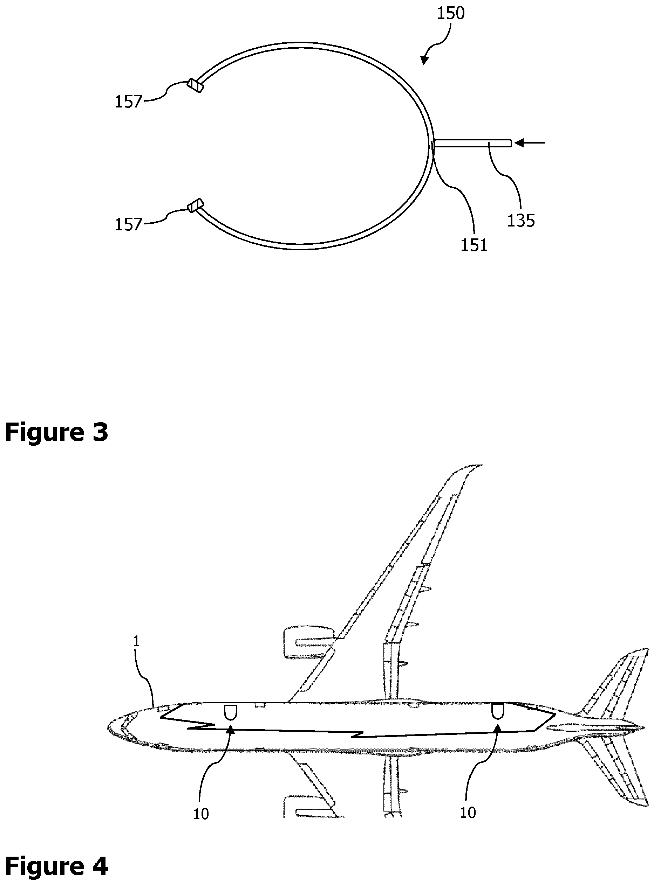

In order to reuse the greywater in an efficient way, the greywater pipe 135 is fluidly connected to a toilet bowl 140 of the lavatory 10, in order to use the greywater as toilet flushing water. This is achieved by a flushing supply pipe 150 fluidly coupled to the greywater buffer 120, 125 via the greywater pipes 125, 135 (or directly to the greywater pipes 125, 135 having sufficient buffer volume). The flushing supply pipe 150 is arranged in or at the toilet bowl 140, in order to release greywater into the toilet bowl 140 to flush it. The details of the flushing supply pipe 150 will be explained with respect to Figures 2 and 3.

The toilet bowl 140 has a drain 145 which can be coupled to a waste water system, such as a vacuum waste water system of a vehicle, in which the lavatory 10 is installed. This is schematically illustrated as a connection 147.

Furthermore, the lavatory 10 can further comprise a greywater conveying device 130 configured to convey greywater from the greywater buffer 120, 125 to the flushing supply line 150. This can include pressurising the greywater by the greywater conveying device 130. For instance, flushing the toilet bowl 140 usually requires a cleaning effect by the flushing water, which can be achieved by spraying the greywater under a particular pressure into the toilet bowl 140.

The lavatory 10 can further comprise a control unit 200 configured to control the greywater reuse lavatory 10. For instance, the control unit 200 can control the conveying device 130, for example, for flushing the toilet as well as flushing out or cleaning the flushing supply pipe 150, as will now be explained in more detail with respect to Figures 2 and 3.

Figure 2 schematically illustrates details of an exemplary greywater flushing supply pipe 150. The flushing supply pipe 150 is arranged in or at the toilet bowl 140 (not depicted in Figure 2 for sake of brevity) and comprises a plurality of nozzles 155 arranged in the flushing supply pipe 150 and configured to flush the toilet bowl 140 with greywater. As a mere example, the nozzles 155 can be arranged at a bottom of the flushing supply pipe 150 and/or can be directed to spray onto an inner surface of the toilet bowl 140. The arrows depicted in Figure 2 illustrate a greywater flow from the greywater pipe 135 through the inlet 151 of the flushing supply pipe 150 and towards each nozzle 155.

As a mere example, when the conveying device 130 conveys greywater from the buffer 120, 125 into the flushing supply pipe 150, the greywater is sprayed via the nozzles 155 into the toilet bowl 140. The number of depicted nozzles 155 does not limit the present disclosure. It is to be understood that any number of nozzles 155 can be arranged in the flushing supply pipe 150, depending on the cleaning effect that is to be achieved by the nozzles 155.

Figure 2 schematically illustrates the flushing supply pipe 150 as forming an incomplete ring. It is to be understood that the form of the flushing supply pipe (in the plan view of Figure 2) is not restricted to a circle or ring, but rather depends on the shape of the toilet bowl 140.

Figure 2 further illustrates a cross-section of the flushing supply pipe 150 taken along the circumferential direction of the supply pipe 150, i.e. the flowing direction of the greywater through the supply pipe 150.

The flushing supply pipe 150 further comprises a discharge 157 configured to selectively open and close. The discharge 157 is illustrated as being arranged at an end of the flushing supply pipe 150 downstream of the inlet 151, where the flushing supply pipe 150 is fluidly connected to the greywater pipe 135. This allows arranging the flushing supply pipe 150 continuously from the inlet 151 to the discharge 157 along an inner circumference of the toilet bowl 140.

During a regular flush of the toilet bowl 140, the discharge 157 is closed, i.e. is in a closed position. This means that the discharge 157 closes the flushing supply pipe 150, for example, in a fluid tight manner, so that greywater is only released/sprayed through the nozzles 155, in order to flush the toilet. As the greywater can include material that may clog the nozzles 155, flushing out or cleaning the flushing supply pipe 150 should be performed regularly. This may be, for example, achieved under control of the control unit 200.

Flushing out or cleaning the flushing supply pipe 150 can be achieved by bringing the discharge 157 into an open position and controlling a flow of greywater through the flushing supply pipe 150. This controlling of a flow of greywater includes releasing the greywater through the flushing supply pipe 150 by gravity, i.e. the controlling includes opening the discharge 157. The discharge 157 has a cross-sectional area that is larger than a cross-sectional area of each of the plurality of nozzles 155, or even larger than the sum of the cross-sectional areas of all nozzles 155. Thus, if the discharge 157 is open, i.e. provides a fluid connection between the interior of the flushing supply pipe 150 with the ambient (the air inside of the toilet bowl 140), the greywater flushes through the flushing supply pipe 150 and is discharged through discharge 157 as the discharge 157 has the smaller flow resistance compared to the nozzles 155.

The discharge 157 can comprise a mechanical closing means, such as a mechanical valve that is configured to open only, if a pressure of the greywater in the flushing supply pipe 150 exceeds a predefined pressure value (a predefined threshold). As a mere example, a spring or biasing element may hold the discharge 157 in the closed position, wherein the spring or biasing element is designed to withstand only the predefined pressure. Thus, if greywater is brought into the flushing supply pipe 150 at a higher pressure (above the predefined pressure value or threshold), the discharge 157 will open and the flushing supply pipe 150 can be flushed out or cleaned. Thus, any material accumulated inside of the flushing supply pipe 150 and/or clogging the nozzles 155 will be removed. It is to be understood that the predefined pressure value is above a pressure value employed for flushing the toilet bowl 140 via the nozzles 155, so that flushing the toilet can be performed effectively.

The flushing out or cleaning of the flushing supply pipe 150 under a higher pressure may be facilitated by installing at least some nozzles 155 made of an elastic material. Such elastic material can be configured to expand based on a pressure of the greywater in the flushing supply pipe 150. Thus, by increasing the greywater pressure, the cross-sectional area of the respective nozzles 155 increases, so that accumulated or clogging material can already be flushed out through the nozzle 155. Any other material accumulated in the flushing supply pipe 150 can be flushed out through the discharge 157.

As illustrated in Figure 2, the discharge 157 is arranged inside of the toilet bowl 140. Thus, the grey water discharged through the discharge 157 can be released through the drain 145 of the toilet bowl 140 and into the vacuum waste water system via connection 147.

Alternatively, the discharge 157 may be directly coupled (fluidly connected) with the vacuum waste water system (which is not illustrated in Figure 2). In other words, a fluid connection between the interior of the flushing supply pipe 150 and the vacuum waste water system is formed, which fluid connection can be blocked or opened by the discharge 157. This allows using the reduced pressure of the vacuum waste water system to open the discharge 157 and to flush out or clean the flushing supply pipe 150.

The discharge 157 can alternatively or additionally comprise an electrically and/or pneumatically controlled valve or flap. Such valve or flap can be controlled by the control unit 200 directly, i.e., via electrical signals and/or pneumatic control means. Thus, the control unit 200 can open and close the discharge 157 any time, when it is desired to flush out or clean the flushing supply pipe 150.

As a mere example, a pneumatically controlled valve or flap, or its actuator, can be connected to the vacuum waste water system, so that the vacuum thereof, i.e. the low pressure or pressure difference to the ambient, can be used to operate the discharge 157. It is to be understood that such discharges 157 can be combined with a mechanically operated actuator. For instance, opening the discharge 157 may be achieved pneumatically and/or electrically, and closing the discharge 157 may be achieved mechanically, such as by a spring or biasing element.

Figure 3 schematically illustrates details of another exemplary greywater flushing supply pipe 150. Specifically, this pipe 150 has at least one branch and a further discharge 157 at a corresponding end of the branch. For brevity reasons, the nozzles 155 are not illustrated in Figure 3. Such Y-shaped or horseshoe-shaped flushing supply pipe 150 allows flushing out or cleaning the pipe 150 in an efficient manner, as the branches/sections to be flushed out or cleaned are shorter.

Like in the example of Figure 2, the greywater flushing supply pipe 150 can be arranged continuously (from the inlet 151 to the respective discharge 157) along an inner circumference of the toilet bowl 140. Thus, the flushing supply pipe 150 is not restricted to the illustrated shape, but can be adapted to the shape of the toilet bowl 140.

Another not illustrated example of greywater reuse would include the installation of a plurality of flushing supply pipes 150, each having one or more branches and a corresponding number of discharges 157. This can be achieved by branching the grey water pipe 135 and providing grey water to each of the plurality of flushing supply pipes 150.

Irrespective of the form, shape and number of branches of the flushing supply pipe 150, the number of discharges 157 can also be arbitrarily chosen. For instance, at least one further discharge (not explicitly illustrated) can be arranged between the inlet 151 and a downstream end of the flushing supply pipe 150. Thus, the flushing supply pipe 150 (or one or more of its branches) can be divided into sections that can be flushed out or cleaned individually by opening and closing the discharges 157 accordingly.

Figure 4 schematically illustrates an aircraft 1 comprising a plurality of greywater reuse lavatories 10. It is to be understood that the number of greywater reuse lavatories 10 in the aircraft 1 is not restricted to the illustrated two lavatories 10. Actually, any water consuming monument, such as a lavatory, a galley, a shower, a water fountain or the like, required in the aircraft 1 can include the components of a greywater reuse lavatory 10 as explained with respect to Figures 1 to 3.

Furthermore, another monument having a water consumer, but no toilet bowl, can be installed next to or close to a greywater reuse lavatory 10. Drained water from this water consumer would be fed into the greywater buffer 120, 125 of the greywater reuse lavatory 10. As a mere example, a water fountain or a galley with a sink, coffeemaker, and/or dishwasher may be fluidly connected to the greywater buffer 120, 125. This allows filling the buffer 120, 125 faster and more efficiently.

It is believed that the advantages of the technique presented herein will be fully understood from the foregoing description, and it will be apparent that various changes may be made in the form, constructions and arrangement of the exemplary aspects thereof without departing from the scope of the claims.

Because the technique presented herein can be varied in many ways, it will be recognized that the disclosure should be limited only by the scope of the claims that follow.

## Claims

1. A greywater reuse lavatory (10) for an aircraft (1), comprising:
a water consumer (110) associated with a water source (112);
a greywater buffer (120, 125) fluidly coupled to a drain (113) of the water consumer and configured to buffer a predefined amount of greywater drained from the water consumer;
a toilet bowl (140);
a flushing supply pipe (150) fluidly coupled to the greywater buffer (120, 125) and arranged in or at the toilet bowl; and
a plurality of nozzles (155) arranged in the flushing supply pipe and configured to flush the toilet bowl with greywater,
**characterised in that**
the flushing supply pipe (150) comprises a first discharge (157) arranged in the toilet bowl (140) and configured to selectively open and close, and
the first discharge (157) has a cross-sectional area that is larger than a cross-sectional area of each of the plurality of nozzles.

2. The greywater reuse lavatory of claim 1, further comprising:
a greywater conveying device (130) configured to convey greywater from the greywater buffer (120, 125) to the flushing supply pipe (150) and, preferably, is further configured to pressurise the greywater in the flushing supply pipe.

3. The greywater reuse lavatory of claim 1 or 2, wherein the flushing supply pipe (150) is arranged continuously from an inlet (151) of the flushing supply pipe to the first discharge (157) along an inner circumference of the toilet bowl (140),
wherein, preferably, the first discharge (157) is arranged at an end of the flushing supply pipe (150) downstream of the inlet (151) of the flushing supply pipe.

4. The greywater reuse lavatory of claim 3, wherein the flushing supply pipe (150) has at least one branch and a second discharge (157), wherein the at least one branch is arranged continuously from the inlet of the flushing supply pipe to the second discharge (157) along an inner circumference of the toilet bowl (140).

5. The greywater reuse lavatory of one of claims 1 to 4, further comprising:
a third discharge (157) arranged between an inlet (151) and a downstream end of the flushing supply pipe (150).

6. The greywater reuse lavatory of one of claims 1 to 5, wherein the first discharge (157) comprises a mechanical valve configured to open, if a pressure of the greywater in the flushing supply pipe exceeds a predefined threshold, and/or
wherein the first discharge (157) comprises an electrically and/or pneumatically controlled valve or flap.

7. The greywater reuse lavatory of claim 6, wherein a drain (145) of the toilet bowl (140) is configured to be fluidly connected to a vacuum waste water system (147), and
wherein the pneumatically controlled valve or flap is driven or actuated by the vacuum present in the vacuum waste water system (147).

8. The greywater reuse lavatory of one of claims 1 to 7, wherein the first discharge (157) is configured to be fluidly connected to a vacuum waste water system (147).

9. The greywater reuse lavatory of one of claims 1 to 8, wherein at least some of the plurality of nozzles (155) are made of a rigid material, preferably a rigid plastic or metal, and/or
wherein at least some of the plurality of nozzles (155) are made of an elastic material configured to expand based on a pressure of the greywater in the flushing supply pipe (150).

10. The greywater reuse lavatory of one of claims 1 to 9, further comprising:
a control unit (200) configured to control the greywater reuse lavatory, so that the first discharge (157) achieves an open state and the flushing supply pipe (150) is flushed with greywater through the first discharge (157).

11. An aircraft (1), comprising:
at least one greywater reuse lavatory (10) of one of claims 1 to 10.

## Patentansprüche

1. Waschraum (10) mit Grauwasserwiederverwendung für ein Flugzeug (1), umfassend:
einen Wasserverbraucher (110), der einer Wasserquelle (112) zugeordnet ist;
einen Grauwasserpuffer (120, 125), der fluidisch mit einem Ablauf (113) des Wasserverbrauchers gekoppelt ist und dazu ausgebildet ist, eine vordefinierte Menge an aus dem Wasserverbraucher abgelassenem Grauwasser zu puffern;
eine Toilettenschüssel (140);
eine Spülzuleitung (150), die fluidisch mit dem Grauwasserpuffer (120, 125) gekoppelt und in oder an der Toilettenschüssel angeordnet ist; und
mehrere Düsen (155), die in der Spülzuleitung angeordnet und dazu ausgebildet sind, die Toilettenschüssel mit Grauwasser zu spülen,
**dadurch gekennzeichnet, dass**
die Spülzuleitung (150) einen ersten Auslass (157) umfasst, der in der Toilettenschüssel (140) angeordnet und dazu ausgebildet ist, sich selektiv zu öffnen und zu schließen, und
der erste Auslass (157) eine Querschnittsfläche aufweist, die größer als eine Querschnittsfläche jeder der mehreren Düsen ist.

2. Waschraum mit Grauwasserwiederverwendung nach Anspruch 1, ferner umfassend:
eine Grauwasserfördervorrichtung (130), die dazu ausgebildet ist, Grauwasser aus dem Grauwasserpuffer (120, 125) zur Spülzuleitung (150) zu fördern, und vorzugsweise ferner dazu ausgebildet ist, das Grauwasser in der Spülzuleitung mit Druck zu beaufschlagen.

3. Waschraum mit Grauwasserwiederverwendung nach Anspruch 1 oder 2, wobei die Spülzuleitung (150) durchgehend entlang einem Innenumfang der Toilettenschüssel (140) von einem Einlass (151) der Spülzuleitung bis zum ersten Auslass (157) angeordnet ist,
wobei vorzugsweise der erste Auslass (157) an einem Ende der Spülzuleitung (150) stromabwärts des Einlasses (151) der Spülzuleitung angeordnet ist.

4. Waschraum mit Grauwasserwiederverwendung nach Anspruch 3, wobei die Spülzuleitung (150) mindestens einen Abzweig und einen zweiten Auslass (157) aufweist, wobei der mindestens eine Abzweig durchgehend entlang einem Innenumfang der Toilettenschüssel (140) vom Einlass der Spülzuleitung bis zum zweiten Auslass (157) angeordnet ist.

5. Waschraum mit Grauwasserwiederverwendung nach einem der Ansprüche 1 bis 4, ferner umfassend:
einen dritten Auslass (157), der zwischen einem Einlass (151) und einem stromabwärtigen Ende der Spülzuleitung (150) angeordnet ist.

6. Waschraum mit Grauwasserwiederverwendung nach einem der Ansprüche 1 bis 5, wobei der erste Auslass (157) ein mechanisches Ventil umfasst, das dazu ausgebildet ist, sich zu öffnen, wenn ein Druck des Grauwassers in der Spülzuleitung einen vordefinierten Schwellenwert überschreitet, und/oder
wobei der erste Auslass (157) ein elektrisch und/oder pneumatisch gesteuertes Ventil oder eine elektrisch und/oder pneumatisch gesteuerte Klappe umfasst.

7. Waschraum mit Grauwasserwiederverwendung nach Anspruch 6, wobei ein Ablauf (145) der Toilettenschüssel (140) zur fluidischen Verbindung mit einem Vakuum-Abwassersystem (147) ausgebildet ist, und
wobei das pneumatisch gesteuerte Ventil oder die pneumatisch gesteuerte Klappe durch das in dem Vakuum-Abwassersystem (147) vorhandene Vakuum angetrieben oder betätigt wird.

8. Waschraum mit Grauwasserwiederverwendung nach einem der Ansprüche 1 bis 7, wobei der erste Auslass (157) zur fluidischen Verbindung mit einem Vakuum-Abwassersystem (147) ausgebildet ist.

9. Waschraum mit Grauwasserwiederverwendung nach einem der Ansprüche 1 bis 8, wobei mindestens einige der mehreren Düsen (155) aus einem starren Material, vorzugsweise einem starren Kunststoff oder Metall, hergestellt sind und/oder
wobei mindestens einige der mehreren Düsen (155) aus einem elastischen Material hergestellt sind, das dazu ausgebildet ist, sich in Abhängigkeit von einem Druck des Grauwassers in der Spülzuleitung (150) auszudehnen.

10. Waschraum mit Grauwasserwiederverwendung nach einem der Ansprüche 1 bis 9, ferner umfassend:
eine Steuereinheit (200), die dazu ausgebildet ist, den Waschraum mit Grauwasserwiederverwendung so zu steuern, dass der erste Auslass (157) einen geöffneten Zustand erreicht und die Spülzuleitung (150) mit Grauwasser durch den ersten Auslass (157) gespült wird.

11. Flugzeug (1), umfassend:
mindestens einen Waschraum (10) mit Grauwasserwiederverwendung nach einem der Ansprüche 1 bis 10.

## Revendications

1. Toilettes à réutilisation d'eaux grises (10) pour un aéronef (1), comprenant :
un consommateur d'eau (110) associé à une source d'eau (112) ;
un tampon d'eaux grises (120, 125) couplé fluidiquement à un drain (113) du consommateur d'eau et configuré pour tamponner une quantité prédéfinie d'eaux grises évacuée du consommateur d'eau ;
une cuvette de toilettes (140) ;
un tuyau d'alimentation de rinçage (150) couplé fluidiquement au tampon d'eaux grises (120, 125) et agencé dans ou au niveau de la cuvette de toilettes ; et
une pluralité de buses (155) agencées dans le tuyau d'alimentation de rinçage et configurées pour rincer la cuvette de toilettes avec des eaux grises,
**caractérisé en ce que**
le tuyau d'alimentation de rinçage (150) comprend une première évacuation (157) agencée dans la cuvette de toilettes (140) et configurée pour s'ouvrir et se fermer sélectivement, et
la première évacuation (157) présente une section transversale supérieure à la section transversale de chacune de la pluralité de buses.

2. Toilettes à réutilisation d'eaux grises selon la revendication 1, comprenant en outre :
un dispositif d'acheminement d'eaux grises (130) configuré pour acheminer les eaux grises du tampon d'eaux grises (120, 125) vers le tuyau d'alimentation de rinçage (150) et, de préférence, étant en outre configuré pour mettre sous pression les eaux grises dans le tuyau d'alimentation de rinçage.

3. Toilettes à réutilisation d'eaux grises selon la revendication 1 ou 2, le tuyau d'alimentation de rinçage (150) étant agencé en continu depuis une entrée (151) du tuyau d'alimentation de rinçage jusqu'à la première évacuation (157) le long d'une circonférence intérieure de la cuvette de toilettes (140),
de préférence, la première évacuation (157) étant agencée à une extrémité du tuyau d'alimentation de rinçage (150) en aval de l'entrée (151) du tuyau d'alimentation de rinçage.

4. Toilettes à réutilisation d'eaux grises selon la revendication 3, le tuyau d'alimentation de rinçage (150) comportant au moins une branche et une deuxième évacuation (157), l'au moins une branche étant agencée de manière continue depuis l'entrée du tuyau d'alimentation de rinçage jusqu'à la deuxième évacuation (157) le long d'une circonférence intérieure de la cuvette de toilettes (140).

5. Toilettes à réutilisation d'eaux grises selon l'une des revendications 1 à 4, comprenant en outre :
une troisième évacuation (157) agencée entre une entrée (151) et une extrémité aval du tuyau d'alimentation de rinçage (150).

6. Toilettes à réutilisation d'eaux grises selon l'une des revendications 1 à 5, la première évacuation (157) comprenant une vanne mécanique configurée pour s'ouvrir, si une pression des eaux grises dans le tuyau d'alimentation de rinçage dépasse un seuil prédéfini, et/ou
la première évacuation (157) comprenant une vanne ou un volet à commande électrique et/ou pneumatique.

7. Toilettes à réutilisation d'eaux grises selon la revendication 6, un drain (145) de la cuvette de toilettes (140) étant configuré pour être raccordé de manière fluidique à un système d'eaux usées sous vide (147), et
la vanne ou le volet à commande pneumatique étant commandé ou actionné par le vide présent dans le système d'eaux usées sous vide (147).

8. Toilettes à réutilisation d'eaux grises selon l'une des revendications 1 à 7, la première évacuation (157) étant configurée pour être raccordée de manière fluidique à un système d'eaux usées sous vide (147).

9. Toilettes à réutilisation d'eaux grises selon l'une des revendications 1 à 8, au moins certaines de la pluralité de buses (155) étant réalisées en un matériau rigide, de préférence en une matière plastique ou en métal rigide, et/ou
au moins une certaines la pluralité de buses (155) étant composées d'un matériau élastique configuré pour se dilater sur la base d'une pression des eaux grises dans le tuyau d'alimentation de rinçage (150).

10. Toilettes à réutilisation d'eaux grises selon l'une des revendications 1 à 9, comprenant en outre :
une unité de commande (200) configurée pour commander les toilettes à réutilisation d'eaux grises, de sorte que la première évacuation (157) atteigne un état ouvert et que le tuyau d'alimentation de rinçage (150) soit rincé avec des eaux grises à travers la première évacuation (157).

11. Aéronef (1), comprenant :
au moins des toilettes à réutilisation d'eaux grises (10) selon une des revendications 1 à 10.
